**Europäisches Patentamt**

**European Patent Office**

**Office européen des brevets**

(19)

(11) Veröffentlichungsnummer: **0 046 259**
**B1**

(12)

# EUROPÄISCHE PATENTSCHRIFT

(45) Veröffentlichungstag der Patentschrift:
12.12.84

(21) Anmeldenummer: **81106238.9**

(22) Anmeldetag: **10.08.81**

(51) Int. Cl.³: **H 04 L 11/00, H 04 L 25/50**

(54) **Verfahren zum Herstellen von Verbindungen von an einer Datenvermittlungsanlage angeschlossenen Teilnehmerstellen bzw. Übertragungsleitungen zu Signalumsetzern.**

(30) Priorität: **14.08.80 DE 3030887**

(43) Veröffentlichungstag der Anmeldung:
**24.02.82 Patentblatt 82/8**

(45) Bekanntmachung des Hinweises auf die Patenterteilung:
**12.12.84 Patentblatt 84/50**

(84) Benannte Vertragsstaaten:
**AT BE CH FR GB IT LI LU NL SE**

(56) Entgegenhaltungen:
**EP - A - 0 017 035**
**EP - A - 0 027 557**
**DE - A - 2 416 730**
**DE - A - 2 839 835**
**DE - B - 2 813 961**

**PHILIPS TELECOMMUNICATION REVIEW, Vol. 39, No. 2, Juni 1981, Hilversum, NL F.T.A. VAN BERGEN, L.M. SLOTBOOM "A Teletex-Telex converter" Seiten 49-62**

(73) Patentinhaber: **Siemens Aktiengesellschaft, Berlin und München Wittelsbacherplatz 2, D-8000 München 2 (DE)**

(72) Erfinder: **Franz, Dietmar, Edelweissstrasse 66, D-8039 Puchheim (DE)**
Erfinder: **Torggler, Norbert, Dipl.-Ing., Bellinzonastrasse 7, D-8000 München 71 (DE)**

## Beschreibung

Die Erfindung bezieht sich auf ein Verfahren zum Herstellen von Verbindungen von an einer Datenvermittlungsanlage angeschlossenen, Signale mit unterschiedlichen Prozeduren verarbeitenden und übertragenden Teilnehmerstellen bzw. Übertragungsleitungen zu ebenfalls an der Datenvermittlungsanlage angeschlossenen Signalumsetzern, deren Freizustand bzw. Belegtzustand angebende Zustandssignale in der Datenvermittlungsanlage festgehalten werden, wobei mit Auftreten einer Verbindungsanforderung von einer Teilnehmerstelle bzw. über eine Übertragungsleitung zur Herstellung einer Verbindung zu einem Signalumsetzer hin das Vorhandensein von Freizustandssignalen in der Datenvermittlungsanlage ermittelt wird und wobei ein den Freizustand eines Signalumsetzers angebendes Freizustandssignal mit Belegung des betreffenden Signalumsetzers in ein Belegtzustandssignal geändert wird, welches erst bei Wiederbelegungsfähigkeit des betreffenden Signalumsetzers in ein Freizustandssignal geändert wird.

Es wurde bereits eine als Dienst- oder Protokollumsetzer und kurz als Signalumsetzer zu bezeichnende Schaltungsanordnung zur Übertragung von digitalen Signalen zwischen entsprechend einer ersten Datenübertragungsprozedur und mit einem ersten Datenformat arbeitenden Sende- und/oder Empfangseinrichtungen und entsprechend einer von der ersten Datenübertragungsprozedur verschiedenen zweiten Datenübertragungsprozedur sowie mit einem von dem ersten Datenformat verschiedenen zweiten Datenformat arbeitenden Sende- und/oder Empfangseinrichtungen über eine Vermittlungsanlage vorgeschlagen (EP 80 105 713.4, Veröffentlichungsnummer EP-A2-0 027 557, veröffentlicht am 29.4. 81. Bei dieser Schaltungsanordnung ist eine Anzahl von Umsetzeinrichtungen vorgesehen, die an zu zwei verschiedenen Gruppen von Anschlußschaltungen gehörende Anschlußschaltungen der Vermittlungsanlage angeschlossen sind. Im Zuge einer Verbindung zwischen einer mit der ersten Datenübertragungsprozedur und dem ersten Datenformat arbeitenden Sendeeinrichtung und einer mit der zweiten Datenübertragungsprozedur und dem zweiten Datenformat arbeitenden Empfangseinrichtung wird eine derartige Umsetzeinrichtung für die Ausführung der erforderlichen Umsetzvorgänge benutzt. Zu diesem Zweck wird die betreffende Umsetzeinrichtung von der Vermittlungsanlage auf entsprechende Anforderung hin belegt. Um eine der in einer Mehrzahl vorgesehenen Umsetzeinrichtungen belegen zu können, müssen der Vermittlungsanlage Informationen über die Belegungsfähigkeit der betreffenden Umsetzeinrichtungen zur Verfügung stehen.

Der vorliegenden Erfindung liegt nun die Aufgabe zugrunde, einen Weg zu zeigen, wie ausgehend von einem Verfahren der eingangs genannten Art für die Datenvermittlungsanlage auf relativ einfache Weise Informationen über die Belegungsfähigkeit bzw. den Belegungszustand der einzelnen vorgesehenen Signalumsetzer bzw. Umsetzeinrichtungen zur Verfügung gestellt werden können.

Gelöst wird die vorstehend aufgezeigte Aufgabe bei einem Verfahren der eingangs genannten Art erfindungsgemäß dadurch, daß von dem jeweiligen Signalumsetzer nach erfolgter Weiterleitung der dem betreffenden Signalumsetzer zuvor für eine Signalumsetzung zugeführten Signale ein das Signalübertragungsende angebendes, gesondertes Freimeldesignal abgegeben wird, durch welches das den Belegtzustand dieses Signalumsetzers angebende Belegtzustandssignal unmittelbar in ein Freizustandssignal geändert wird.

Die Erfindung bringt den Vorteil mit sich, daß auf relativ einfache Weise in der Datenvermittlungsanlage Informationen bezüglich des Belegtzustands der für eine Signalumsetzung in Frage kommenden Signalumsetzer zur Verfügung gestellt werden können.

Zweckmäßigerweise wird als Freimeldesignal ein in dem jeweiligen Signalumsetzer jeweils gesondert gespeichertes Steuersignal verwendet, welches von dem betreffenden Signalumsetzer nach Abgabe von diesem zuvor zugeführten Informationssignalen abgegeben wird. Hierdurch ergibt sich der Vorteil eines besonders geringen Steuerungsaufwands für die Bereitstellung des jeweiligen Freimeldesignals.

Von dem jeweiligen Signalumsetzer kann ein dessen Belegtzustand angebendes Steuersignal an die Datenvermittlungsanlage in dem Fall abgegeben werden, daß der betreffende Signalumsetzer gestört ist. Hierdurch ergibt sich der Vorteil, daß sichergestellt werden kann, daß von der Datenvermittlungsanlage nicht für eine Signalumsetzung unbrauchbare Signalumsetzer belegt werden.

Anhand von Zeichnungen wird die Erfindung nachstehend beispielsweise näher erläutert.

Fig. 1 zeigt in einem Blockdiagramm eine Datenvermittlungsanlage, mit der Sende-/Empfangseinrichtungen und Signalumsetzer verbunden sind.

Fig. 2 zeigt einen zur Erläuterung der Erfindung dienenden Aufbau eines Teiles der in Fig. 1 angedeuteten Datenvermittlungsanlage.

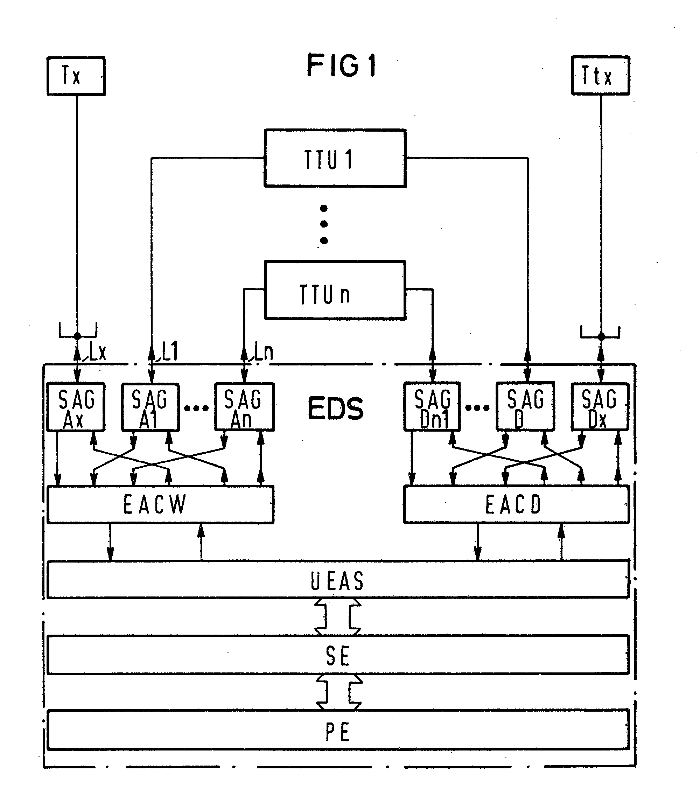

In Fig. 1 ist wie in der eingangs genannten Patentanmeldung ausschnittsweise eine bekannte elektronische Datenvermittlungsanlage EDS dargestellt. Von dieser Datenvermittlungsanlage EDS sind lediglich zu einer ersten Gruppe von Anschlußschaltungen gehörende Anschlußschaltungen SAGAx, SAGA1 bis SAGAn, zu einer zweiten Gruppe von Anschlußschaltungen gehörende Anschlußschaltungen SAGDx, SAGD1 bis SAGDn, den einzelnen Gruppen von Anschlußschaltungen zugehörige Eingabe-/Ausgabe-Codewandler EACW bzw. EACD eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen dienen dazu, digitale Signale polaritätswechselweise zu verarbeiten. Die mit dem anderen Eingabe-/Ausgabe-Codewandler EACD verbundenen Anschlußschaltungen dienen zur Verarbeitung von sogenannten Bitgruppen, das sind jeweils eine Mehrzahl von Bits, beispielsweise acht Bits, umfassende digitale Signale, die auch als Envelopes bezeichnet werden.

Von den in Fig. 1 angedeuteten Anschlußschaltungen sind einige der Polaritätswechsel verarbeitenden Anschlußschaltungen mit Sende-/Empfangseinrichtungen verbunden, welche digitale Signale mit einer ersten Datenübertragungsrate und in einem ersten Datenformat abgeben und aufnehmen. Bei diesen Sende-/Empfangseinrichtungen mag es sich um übliche Fernschreib- bzw Telexstationen handeln, von denen in Fig. 1 eine mit Tx angedeutet ist. Diese Telex-Stationen mögen mit einer Datenübertragungsrate von 50 Bd und unter Ausnutzung des internationalen Telegrafenalphabets Nr. 2 arbeiten, also mit einem Start-Stop-Datenformat. Die Telex-Station TX ist dabei über eine beispielsweise im Halbduplexbetrieb ausgenutzte Leitung Lx an der Anschlußschaltung SAGAx angeschlossen. Ein auf dieser Leitung Lx eingetragenes Vielfachzeichen soll andeuten, daß an der betreffenden Anschlußschaltung SAGAx noch mehrere Telex-Stationen angeschlossen sein können.

Mit einigen der digitalen Signale in Form von Bitgruppen bzw. Envelopes verarbeitenden Anschlußschaltungen sind gemäß Fig. 1 Sende-/Empfangseinrichtungen verbunden, die digitale Signale seriell in Form von Bitgruppen bzw. Envelopes abgeben bzw. aufnehmen können. Bei diesen Sende-/Empfangseinrichtungen mag es sich um sogenannte Bürofernschreibstationen handeln, die auch als Teletex-Stationen bezeichnet werden. In Fig. 1 ist eine derartige Teletex-Station mit Ttx angedeutet. Diese Teletex-Station ist an der Anschlußschaltung SAGDx angeschlossen. Ein in der betreffenden Verbindungsleitung eingezeichnetes Vielfachzeichen soll dabei andeuten, daß an der betreffenden Anschlußschaltung SAGDx noch mehrere Teletex-Stationen angeschlossen sein können. Bezüglich der Teletex-Stationen sei angemerkt, daß diese beispielsweise seriell auftretende digitale Signale mit einer Datenübertragungsrate von 2400 Bit/sec abgeben und aufnehmen können, und zwar als synchrone Datensignale. Damit sind derartige Datensignale nicht durch Start- und Stop-Zeichen festgelegt.

Mit der in Fig. 1 dargestellten Datenvermittlungsanlage EDS ist eine Anzahl von Signalumsetzern TTU1 bis TTUn verbunden. Der Aufbau dieser Signalumsetzer ist in der eingangs genannten Patentanmeldung bereits beschrieben worden; er wird daher hier vorausgesetzt. Im Hinblick auf die nachstehenden Ausführungen sei noch angemerkt, daß der Signalumsetzer TTU1 über eine Leitung L1 sowohl sendeseitig als auch empfangsseitig mit der Anschlußschaltung SAGA1 verbunden ist, und daß der Signalumsetzer TTUn sowohl sendeseitig als auch empfangsseitig über die Leitung Ln mit der Anschlußschaltung SAGAn verbunden ist. Mit weiteren Signaleingängen/Signalausgängen sind die betreffenden Signalumsetzer mit den Anschlußschaltungen SAGD1 bzw. SAGDn verbunden. Über die erwähnten Verbindungsleitungen nehmen die Signalumsetzer die jeweils hinsichtlich der Datenübertragungsprozedur und im Datenformat umzusetzenden digitalen Signale auf bzw. geben die jeweils umgesetzten digitalen Signale ab. Dies bedeutet, daß die Signalumsetzer die ihnen zugeführten Telex-Signale in in den Teletex-Stationen wiedergebbare digitale Signale umsetzen und von den Teletex-Stationen abgegebene digitale Signale in Telex-Signale umsetzen. Diese Umsetzung kann auch einschließen, daß von einer Teletex-Station abgegebene Sonderzeichen (z. B. das Dollarzeichen) in ausgeschriebener Form der jeweils in Frage kommenden Telex-Station zugesendet wird.

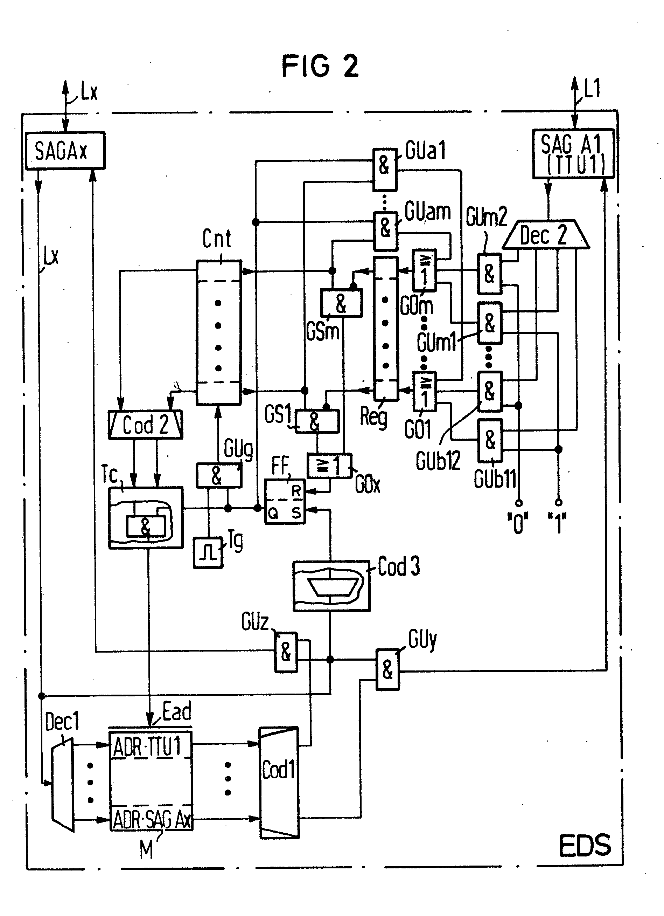

In Fig. 2 ist nun ein Ausschnitt der in Fig. 1 angedeuteten Datenvermittlungsanlage EDS zur Veranschaulichung des Verfahrens gemäß der Erfindung gezeigt. Gemäß Fig. 2 sind die in Fig. 1 bereits angedeuteten Anschlußschaltungen SAGAx und SAGA1 näher veranschaulicht. Mit der Anschlußschaltung SAGAx ist die in Fig. 1 ebenfalls angedeutete Leitung Lx verbunden, und mit der Anschlußschaltung SAGA1 ist die in Fig. 1 ebenfalls angedeutete Leitung L1 verbunden. Die Anschlußschaltung SAGA1 ist — wie dies in Fig. 2 angedeutet ist — mit dem Signalumsetzer TTU1 verbunden.

Die in Fig. 2 angedeutete Schaltungsanordnung enthält einen durch ein Register Reg angedeuteten Belegungszustandsspeicher, in welchem Informationen über den Frei-/Belegtzustand der einzelnen Signalumsetzer enthalten sind. Die Ausgänge der einzelnen Registerstufen (1-Bit-Registerstufen) des Registers Reg sind mit Sperreingängen von Sperrglieder GS1 bis GSm verbunden, die mit Signaleingängen an den Ausgängen der Zählerstufen eines Zählers Cnt angeschlossen sind. Dieser Zähler Cnt mag so ausgelegt sein, daß er jeweils nur von einem seiner Zählerausgänge ein Ausgangssignal »1« abgibt.

Mit ihren Ausgängen sind die Sperrglieder GS1 bis GSm über ein ODER-Glied GOx am Rücksetzeingang R eines bistabilen Kippgliedes FF angeschlossen. Dieses bistabile Kippglied ist mit seinem Setzeingang S am Ausgang eines Codierers Cod3 angeschlossen, der auf ein ihm eingangsseitig zugeführtes Steuersignal hin ausgangsseitig ein »1«-Signal abzugeben vermag. In Fig. 2 ist der Codierer als eine Decoderschaltung enthaltende Anordnung angedeutet. Der betreffende Codierer Cod3 ist eingangsseitig über eine Signalabgabeleitung Lx an der Anschlußschaltung SAGAx angeschlossen.

Das bistabile Kippglied FF ist mit seinem im Setzzustand ein »1«-Signal führenden Ausgang Q mit einem Eingang eines UND-Gliedes GUg verbunden. Dieses UND-Glied GUg ist mit einem weiteren Eingang am Ausgang eines Taktgenerators Tg angeschlossen. Mit seinem Ausgang ist das UND-Glied GUg an einem Zähleingang des Zählers Cnt angeschlossen.

Mit dem Ausgang Q des bistabilen Kippgliedes FF ist ferner der Steuereingang einer Signalübertragungsschaltung Tc verbunden, in der lediglich ein Sperrglied angedeutet ist, welches auf die Zuführung eines »0«-Steuersignals vom Ausgang Q des bistabilen Kippgliedes FF hin übertragungsfähig ist. In der Signalübertragungsschaltung Tc kann gegebenenfalls eine Mehrzahl von Verknüpfungsgliedern vorgesehen sein, um der Eingangsseite dieser Signalübertragungsschaltung Tc zugeführte Signale — dabei handelt es sich um Adressen — ausgangsseitig abzugeben.

Der Ausgang Q des bistabilen Kippgliedes FF ist schließlich noch mit den einen Eingängen von weiteren UND-Gliedern GUa1 bis GUam verbunden. Diese UND-Glieder sind mit ihren anderen Eingängen an den Zählerausgängen des Zählers Cnt angeschlossen. Ausgangsseitig sind die betreffenden UND-Glieder jeweils über ein ODER-Glied GO1 bis GOm mit den Einschreibeingängen der Registerstufen des Registers Reg verbunden.

Mit weiteren Eingängen der zuletzt erwähnten ODER-Glieder GO1 bis GOm sind die Ausgänge von UND-Gliedern GUb11, GUb12 bis GUm1, GUm2 verbunden. Von diesen UND-Gliedern sind die UND-Glieder GUb11 bis GUm1 mit ihren einen Eingängen gemeinsam an einem Schaltungspunkt angeschlossen, dem ein »1«-Signal ständig zugeführt wird. Die anderen UND-Glieder GU12 bis GUm2 sind mit ihren einen Eingängen gemeinsam an einem Schaltungspunkt angeschlossen, dem ständig ein »0«-Signal zugeführt wird. Mit ihren anderen Eingängen sind die UND-Glieder GUb11, GUb12 bis GUm1, GUm2 an den Ausgängen eines Decoders Dec2 angeschlossen, der eingangsseitig am Ausgang der Anschlußschaltung SAGA1 angeschlossen ist.

Der bereits erwähnte Zähler Cnt ist mit seinen Zählerausgängen ferner an den Eingängen eines Codierers Cod2 angeschlossen. Dieser Codierer nimmt eine Umcodierung der ihm von dem Zähler Cnt her zugeführten Zählersignale vor; die umcodierten Zählersignale dienen als Adressen zur Ansteuerung eines im unteren Teil der Fig. 2 angedeuteten Speichers M. Wie bereits erwähnt, dient für die Übertragung der betreffenden Adressen die Signalübertragungsschaltung Tc. Diese Schaltung ist eingangsseitig an den Ausgängen des Codierers Cod2 angeschlossen, und ausgangsseitig ist sie mit einem Einschreibeingang Ead des Speichers M verbunden. Dieser Speicher M dient als Verbindungsspeicher, der — wie bei der Datenvermittlungsanlage EDS bereits bekannt — für jede eine Zubringerleitung darstellende, digitale Signale zuführende Leitung (z. B. Lx) eine Speicherzelle enthält, in der die Adresse der in Frage kommenden, eine Abnehmerleitung darstellenden Übertragungsleitung (z. B. L1) eingeschrieben ist bzw. wird, über die die jeweiligen digitalen Signale abzugeben sind.

Der Speicher M ist mit seinen Adressierungseingängen an den Ausgängen eines Decoders Dec1 angeschlossen, der eingangsseitig über die Leitung Lx an der Anschlußschaltung SAGAx angeschlossen ist. Mit seinen Signalausgängen — die auf entsprechende Ansteuerung hin jeweils ein Ausgangssignal führen — ist der Speicher M mit der Eingangsseite eines Codierers Cod1 verbunden. Dieser Codierer Cod1 ist gemäß Fig. 2 ausgangsseitig mit den einen Eingängen zweier UND-Glieder GUy, GUz verbunden.

Die beiden UND-Glieder GUy, GUz sind mit ihren einen Eingängen gemeinsam an der bereits erwähnten Leitung Lx angeschlossen. Das UND-Glied GUy ist ausgangsseitig mit einem Signaleingang der Anschlußschaltung SAGA1 verbunden. Das UND-Glied GUz ist ausgangsseitig mit einem Signaleingang der Anschlußschaltung SAGAx verbunden.

Wie oben bereits ausgeführt, enthält der Speicher M in seinen den einzelnen Zubringerleitungen zugeordneten Speicherzellen Adressen über die jeweils zu benutzenden Abnehmerleitungen. In Fig. 2 ist in diesem Zusammenhang mit ADR · TTU1 angedeutet, daß digitale Signale von derjenigen Zubringerleitung, welcher die oberste Zelle in dem Speicher M zugehörig ist, über eine Abnehmerleitung weiterzuleiten sind, die zu dem ersten Signalumsetzer TTU1 hinführt. In entsprechender Weise ist durch die in dem Speicher M angegebene Adresse ADR · SAGAx angedeutet, daß digitale Signale von der Zubringerleitung her, welcher die letzte Speicherzelle in dem Speicher M zugehörig ist, über eine Abnehmerleitung weitergeleitet werden, die an der Anschlußschaltung SAGAx angeschlossen ist.

Nunmehr sei das Verfahren gemäß der Erfindung unter Bezugnahme auf die in Fig. 2 dargestellte Schaltungsanordnung näher erläutert. Dazu sei zunächst angenommen, daß sich die betreffende Schaltungsanordnung im Ausgangszustand befindet, in welchem zunächst keine Verbindung bestehen mag. Ausgehend von diesem Zustand sei nunmehr angenommen, daß die an der Leitung Lx angeschlossene Telex-Station einen solchen Verbindungswunsch hat, daß ein Signalumsetzer in diese Verbindung einzubeziehen ist. Im Hinblick auf Fig. 1 bedeutet dies, daß die betreffende Telex-Station digitale Signale an eine Teletex-Station aussenden möchte. Zu diesem Zweck gibt die betreffende Telex-Station ein die gewünschte Verbindung charakterisierendes Meldesignal ab, welches von dem Codierer Cod3 als solches erkannt wird. Der Codierer Cod 3 gibt daraufhin ausgangsseitig ein »1«-Signal ab, das zum Setzen des bisher im Rückstellzustand befindlichen bistabilen Kippgliedes FF führt. Das daraufhin vom Ausgang Q des bistabilen Kippgliedes FF abgegebene »1«-Signal bewirkt zum einen, daß die Signalübertragungsschaltung Tc gesperrt wird, so daß dieser Schaltung eingangsseitig zugeführte Signale nicht ausgangsseitig abgegeben werden. Zum anderen bewirkt das vom Ausgang Q des bistabilen Kippgliedes FF abgegebene »1«-Signal, daß das UND-Glied GUg für die von dem Taktgenerator Tg abgegebenen Taktimpulse übertragungsfähig ist. Diese Taktimpulse gelangen zum Zähleingang des Zählers Cnt, der daraufhin seinen Zählbetrieb ausführt, beispielsweise im Rhythmus der auftretenden Taktimpulse. Überdies bewirkt das vom Ausgang Q des bistabilen Kippgliedes FF abgegebene »1«-Signal, daß die UND-Glieder GUa1 bis GUam in den übertragungsfähigen Zustand gesteuert werden.

Der Zähler Cnt gibt, wie oben bereits erwähnt, in seinen Zählerstellungen jeweils nur von einem seiner Zählerausgänge ein »1«-Signal ab. Dadurch werden die Sperrglieder GS1 bis GSm nacheinander in den übertragungsfähigen Zustand gesteuert. Dasjenige Sperrglied der betreffenden Sperrglieder, welches an seinem Sperreingang ein »0«-Signal von der zugehörigen Registerzelle des Registers Reg zugeführt erhält, gibt dann ein »1«-Signal von seinem Ausgang ab. Es sei bemerkt, daß das Vorhandensein eines »0«-Zustands bzw. -Signals in der jeweiligen Registerzelle des Registers Reg kennzeichnend dafür ist, daß der zugehörige Signalumsetzer (TTU) sich noch im Freizustand befindet. Ein »1«-Zustand bzw. -Signal in der jeweiligen Registerzelle des Registers Reg ist hingegen kennzeichnend dafür, daß der zugehörige Signalumsetzer (TTU) sich im Belegtzustand befindet. Die Zuordnung zwischen den einzelnen Registerzellen des Registers Reg und den Signalumsetzern (TTU) ergibt sich unter Berücksichtigung der verschiedenen Zählerstellungen des Zählers Cnt, der mit seinen unterschiedlichen Zählerstellungen die Adressen sämtlicher Signalumsetzer (TTU) abgibt.

Nimmt man beispielsweise an, daß dem Sperreingang des in Fig. 2 dargestellten Sperrgliedes GSm ein »0«-Signal zugeführt wird, so bewirkt das von diesem Sperrglied auf eine entsprechende Ansteuerung von dem Zähler Cnt hin abgegebene »1«-Signal, daß über das ODER-Glied GOx ein »1«-Signal an den Rücksetzeingang R des bistabilen Kippgliedes FF abgegeben wird. Damit gelangt das bistabile Kippglied FF wieder in seinen Rücksetzzustand, in welchem an dem Ausgang Q ein »0«-Signal auftritt. Vor Abgabe dieses »0«-Signals bewirkt jedoch das UND-Glied GUam — welches zuvor übertragungsfähig gesteuert worden ist — mit der Abgabe eines »1«-Signals über das ODER-Glied GOm, daß in die betrachtete Registerzelle des Registers Reg eine »1« eingeschrieben wird. An dieser Stelle sei bemerkt, daß die zeitlichen Vorgänge so aufeinander abgestimmt sind, daß dieses Einschreiben den zuvor erwähnten Rücksetzvorgang des bistabilen Kippgliedes FF nicht verhindert.

Durch das nunmehr vom Ausgang Q des bistabilen Kippgliedes FF abgegebene »0«-Signal bleibt der Zähler Cnt in seiner zuletzt eingenommenen Zählerstellung stehen. Die Signalübertragungsschaltung Tc ist aber nunmehr übertragungsfähig für ihr eingangsseitig von dem Codierer Cod2 zugeführte Signale, welche die Adresse desjenigen Signalumsetzers bilden, dem die betrachtete Registerzelle des Registers Reg zugehörig ist. Diese Adresse wird über die Signalübertragungsschaltung Tc nunmehr an den Einschreibeingang Ead des Speichers M angelegt. Dieser Speicher M wird zu diesem Zeitpunkt vom Ausgang des Decoders Dec1 her angesteuert, welchem von der Anschlußschaltung SAGAx her ein Ansteuersignal von der Telex-Station zugeführt wird, die eine Verbindung aufzubauen wünscht. Auf das Auftreten dieses Steuersignals hin gibt der Decoder Dec1 von seinem der betreffenden Telex-Station bzw. der dieser zugehörigen Zubringerleitung entsprechenden Ausgang ein Adressierungssignal »1« ab durch welches eine bestimmte Speicherzelle des Speichers M angesteuert wird. In diese Speicherzelle wird dann die am Einschreibeingang Ead liegende Adresse eingeschrieben. Zurückkommend auf den zuvor betrachteten Fall bedeutet dies, daß in die betreffende Speicherzelle die Adresse des Signalumsetzers eingeschrieben wird, der als erster freier Signalumsetzer ermittelt worden ist.

Durch die zyklische Abfrage der Speicherzellen des Speichers M werden dann über den Codierer Cod1 die für die einzelnen Adressen in Frage kommenden UND-Glieder GUy, GUz gemäß Fig. 2 mit einem »1«-Signal angesteuert. Im Falle der in dem Speicher M enthaltenen Adresse »ADR · TTU1« wird das UND-Glied GUy angesteuert, welches dann die ihm von der Leitung Lx her und damit von der Telex-Station zugeführten digitalen Signale über die Anschlußschaltung SAGA1 an die Leitung L1 und damit an den Signalumsetzer TTU1 gemäß Fig. 1 abgibt. Wird das UND-Glied GUz hingegen von dem Codierer Cod1 angesteuert, so wird das über die Leitung Lx zugeführte digitale Signal wieder an die Anschlußschaltung SAGAx zurückgeleitet, um beispielsweise einer Telex-Station zugeführt zu werden. In diesem Fall wird aus dem Speicher M gemäß Fig. 2 die Adresse »ADR · SAGAx« ausgelesen.

Nunmehr sei angenommen, daß ein Signalumsetzer, der bisher in eine Verbindung einbezogen war, freigegeben wird. In diesem Fall wird von dem betreffenden Signalumsetzer ein gesondertes Freimeldesignal an die Datenvermittlungsanlage EDS abgegeben. Im vorliegenden Fall wird dieses Freimeldesignal, bei dem es sich um ein in dem jeweiligen Signalumsetzer gesondert gespeichertes Steuersignal handeln mag, über diejenige Anschlußschaltung abgegeben, über der dem betreffenden Signalumsetzer zuvor die umzusetzenden digitalen Signale zugeführt worden sind. Im Falle des Signalumsetzers TTU1 gemäß Fig. 1 handelt es sich dabei um die Anschlußschaltung SAGA1. Die Anschlußschaltung SAGA1 bewirkt daraufhin die Ansteuerung des in Fig. 2 dargestellten Decoders Dec2, der auf diese Ansteuerung hin an einem bestimmten Ausgang ein »1«-Signal abgibt. Der betreffende Ausgang ist dabei dem in Frage kommenden Signalumsetzer zugehörig, der das Ansteuersignal an den betreffenden Decoder abgegeben hat. Im Falle des Signalumsetzers TTU1 gibt der Decoder Dec2 von seinem mit dem einen Eingang des UND-Gliedes GUm2 verbundenen Ausgang ein »1«-Signal ab. Dadurch gibt dieses UND-Glied GUm2 von seinem Ausgang das ihm an einem Eingang zugeführte »0«-Signal ab, welches daraufhin über das ODER-Glied GOm in die in Frage kommende Registerzelle des Registers Reg eingeschrieben wird. Dort wird dann die zuvor enthaltene »1« durch eine »0« ersetzt. Damit ist also in dem Register Reg die Freimeldung bezüglich des Signalumsetzers TTU1 vollzogen. Dies bedeutet, daß dieser Signalumsetzer im Zuge eines weiteren Zuteilungsvorgangs wieder belegt werden kann.

Aus der vorstehenden Beschreibung dürfte ersichtlich geworden sein, daß den Freizustand bzw. den Belegtzustand der Signalumsetzer angebende Zustandssignale in dem Register Reg gemäß Fig. 2 also in der Datenvermittlungsanlage EDS festgehalten werden. Dabei wird mit Auftreten einer Verbindungsanforderung von einer Teilnehmerstelle, wie einer Telex-Station, zur Herstellung einer Verbindung zu einem Signalumsetzer (TTU) hin das Vorhandensein von Freizustandssignalen in der Datenvermittlungsanlage EDS ermittelt, und zwar durch Abfragen des Registers Reg. Es sei an dieser Stelle bemerkt, daß Verbindungsanforderungen auch dann berücksichtigt werden können, wenn sie über eine Übertragungsleitung zugeführt werden, die beispielsweise an einer anderen Vermittlungsanlage angeschlossen ist. Außerdem dürfte ersichtlich geworden sein, daß ein den Freizustand eines Signalumsetzers (TTU) angebendes Freizustandssignal (»0«) mit Belegung des betreffenden Signalumsetzers in ein Belegtzustandssignal (»1«) in dem Register Reg geändert wird und daß dieses Belegtzustandssignal (»1«) erst bei Wiederbelegungsfähigkeit des betreffenden Signalumsetzers (TTU) in ein Freizustandssignal (»0«) geändert wird. Diese die Wiederbelegungsfähigkeit des jeweiligen Signalumsetzers betreffende Änderung der Signalzustände in dem Register Reg wird nun von dem jeweiligen Signalumsetzer nach erfolgter Weiterleitung der ihm zuvor für eine Signalumsetzung zugeführten Signale vorgenommen. Dazu gibt der jeweilige Signalumsetzer, wie bereits angedeutet, ein gesondertes Freimeldesignal ab, welches im vorliegenden Fall verschieden ist von einem das Signalübertragungsende angebenden Begleitsignal. Der Grund hierfür liegt darin, daß das erwähnte Begleitsignal ein Textsignal darstellt, welches dem jeweils gewünschten Signalempfänger zusammen mit den digitalen Signalen zugeführt wird und welches durchaus noch keinen Hinweis darauf bieten muß, daß der betreffende Signalumsetzer wieder belegungsfähig ist. Das erwähnte Freimeldesignal kann zweckmäßigerweise durch ein in dem jeweiligen Signalumsetzer gesondert gespeichertes Steuersignal gebildet sein, welches der betreffende Signalumsetzer nach Abgabe der ihm zuvor zugeführten Informationssignale abgibt. Das Auftreten dieses Steuersignals bzw. des Freimeldesignals bewirkt, daß das den Belegtzustand des betreffenden Signalumsetzers abgebende Belegtzustandssignal (»1«) in der Datenvermittlungsanlage EDS unmittelbar in ein Freizustandssignal (»0«) geändert wird.

Um nun zu verhindern, daß ein gegebenenfalls gestörter Signalumsetzer nicht belegt werden kann, ist vorgesehen, daß von dem jeweiligen Signalumsetzer selbst ein dessen Belegtzustand angebendes Steuersignal an die Datenvermittlungsanlage EDS abgegeben wird. Bezogen auf die in Fig. 2 angedeuteten Verhältnissen hat dies zur Folge, daß der Decoder Dec2 von seinem mit dem einen Eingang des UND-Gliedes GUm1 verbundenen Ausgang ein »1«-Signal abgibt. Dieses »1«-Signal wird dann in diejenige Registerzelle des Registers Reg eingeschrieben, die dem betreffenden Signalumsetzer zugehörig ist.

Im vorstehenden ist das Prinzip der vorliegenden Erfindung anhand einer Signalübertragung von einer Telex-Station zu einer Teletex-Station unter Einbeziehung eines Signalumsetzers (TTU) in die betreffende Verbindung erläutert worden. Es sei hier jedoch darauf hingewiesen, daß das Prinzip der vorliegenden Erfindung in gleicher Weise auch in dem Fall anwendbar ist, daß eine Signalübertragung von einer Teletex-Station zu einer Telex-Station unter Einbeziehung eines Signalumsetzers (TTU) erfolgt. Im Grunde genommen laufen dann den zuvor in Zusammenhang mit Fig. 2 erläuterten Vorgängen entsprechende Vorgänge ab, die hier nicht weiter erläutert zu werden brauchen.

Abschließend sei noch bemerkt, daß die in Fig. 2 dargestellte Schaltungsanordnung zwar anhand von diskreten Verknüpfungselementen erläutert worden ist — bei denen es sich insbesondere um sogenannte Tristate-Verknüpfungselemente handeln mag — daß aber durchaus auch komplexere Realisierungsformen unter Einbeziehung wenigstens eines Mikroprozessors möglich sind.

**Patentansprüche**

1. Verfahren zum Herstellen von Verbindungen von an einer Datenvermittlungsanlage (EDS) angeschlossenen, Signale mit unterschiedlichen Prozeduren verarbeitenden und übertragenden Teilnehmerstellen (Tx, Ttx) bzw. Übertragungsleitungen zu ebenfalls an der Datenvermittlungsanlage angeschlossenen Signalumsetzern (TTU1 bis TTUn), deren Freizustand bzw. Belegtzustand angebende Zustandssignale (»0«, »1«) in der Datenvermittlungsanlage (EDS) festgehalten werden, wobei mit Auftreten einer Verbindungsanforderung von einer Teilnehmerstelle bzw. über eine Übertragungsleitung zur Herstellung einer Verbindung zu einem Signalumsetzer (TTU1 bis TTUn), hin das Vorhandensein von Freizustandssignalen (»0«) in der Datenvermittlungsanlage (EDS) ermittelt wird, und wobei ein den Freizustand eines Signalumsetzers (TTU1 bis TTUn) angebendes Freizustandssignal (»0«) mit Belegung des betreffenden Signalumsetzers (TTU1 bis TTUn) in ein Belegtzustandssignal (»1«) geändert wird, welches erst bei Wiederbelegungsfähigkeit des betreffenden Signalumsetzers (TTU1 bis TTUn) in ein Freizustandssignal (»0«) geändert wird, wobei von dem jeweiligen Signalumsetzer (TTU1 bis TTUn) nach erfolgter Weiterleitung der dem betreffenden Signalumsetzer (TTU1 bis TTUn) zuvor für eine Signalumsetzung zugeführten Signale ein das Signalübertragungsende angebendes, gesondertes Freimeldesignal abgegeben wird, durch welches das den Belegtzustand dieses Signalumsetzers (TTU1 bis TTUn) angebende Belegtzustandssignal (»1«) unmittelbar in ein Freizustandssignal (»0«) geändert wird.

2. Verfahren nach Anspruch 1, dadurch gekennzeichnet, daß als Freimeldesignal ein in dem jeweiligen Signalumsetzer (TTU1 bis TTUn) jeweils gesondert gespeichertes Steuersignal verwendet wird, welches von dem betreffenden Signalumsetzer (TTU1 bis TTUn) nach Abgabe von diesem zuvor zugeführten Informationssignalen abgegeben wird.

3. Verfahren nach Anspruch 1 oder 2, dadurch gekennzeichnet, daß von dem jeweiligen Signalumsetzer (TTU1 bis TTUn) ein dessen Belegtzustand angebendes Steuersignal an die Datenvermittlungsanlage (EDS) in dem Fall abgegeben wird, daß der betreffende Signalumsetzer (TTU1 bis TTUn) gestört ist.

## Claims

1. Method for establishing connections from subscriber stations (tx, Ttx) and transmission lines which are connected to a data exchange system (EDS) and which process and transmit signals in accordance with different procedures to signal converters (TTU1 to TTUn) which are likewise connected to the data exchange system, whose status signals (»0«, »1«) which indicate their free status or engaged status are stored in the data exchange system (EDS), wherein, on the occurence of a connection request from a subscriber station or via a transmission line to establish a connection to a signal converter (TTU1 to TTUn), the presence of free-status signals (»0«) is established in the data exchange system (EDS), and wherein, on the seizure of a signal converter (TTU1 to TTUn), a free-status signal indicating the free status of the signal converter (TTU1 to TTUn) is changed into an engaged-status signal (»1«) which is not changed back into a free-status signal (»0«) until the signal converter in question (TTU1 to TTUn) again becomes available for seizure, wherein, following the forwarding of the signals which have been previously supplied to the relevant signal converter (TTU1 to TTUn) for signal conversion, the signal converter (TTU1 to TTUn) emits a special free-indication signal which indicates the end of the signal transmission and by means of which the engaged-status signal (»1«) which indicates the engaged status of the signal converter (TTU1 to TTUn) is directly changed to a free-status signal (»0«).

2. Method as claimed in claim 1, characterised in that the free-indications signal comprises a control signal which is specially stored in the signal converter in question (TTU1 to TTUn) and which is emitted from the relevant signal converter (TTU1 to TTUn) following the emission of information signals with which it has been previously supplied.

3. Method as claimed in claim 1 or 2, characterised in that the signal converter in question (TTU1 to TTUn) supplies the data exchange system (EDS) with a control signal indicating its engaged status in the event that a fault exists in the signal converter in question (TTU1 to TTUn).

## Revendications

1. Procédé pour établir des liaisons depuis des postes d'abonnés (Tx, Ttx) ou des lignes de transmission, raccordés à une installation de commutation de données (EDS) et traitant et transmettant des signaux selon des procédures différentes, à des convertisseurs de signaux (TTU1 à TTUn) raccordés également à l'installation de commutation de données, et dont les signaux d'état (»0«, »1«), indiquant l'état libre ou l'état occupé, sont conservés dans l'installation de commutation de données (EDS), et selon lequel lors de l'apparition d'une demande de liaison de la part d'un poste d'abonnée ou par l'intermédiaire d'une ligne de transmission pour l'établissement d'une liaison à un convertisseur de signaux (TTU1 à TTUn), la présence de signaux d'état libre (»0«) est déterminée dans l'installation de commutation de données (EDS) et selon lequel un signal d'état libre (»0«) indiquant l'état libre d'in convertisseur de signaux (TTU1 à TTUn) est modifié, lors de l'occupation du convertisseur de signaux (TTU1 à TTUn) considéré, en un signal d'état occupé (»1«), qui est modifié en un signal d'état libre (»0«) uniquement dans le cas d'une capacité de nouvelle occupation du convertisseur de signaux (TTU1 à TTUn) considéré, et selon lequel, une fois effectuée la retransmission des signaux envoyés préalablement au convertisseur de signaux considéré (TTU1 à TTUn) pour une conversion de signaux, le convertisseur de signaux considéré (TTU1 à TTUn) délivre un signal particulier de signalisation libre, indiquant la fin de la transmission du signal et au moyen duquel le signal d'état occupé (»1«), indiquant l'état occupé de ce convertisseur de signaux (TTU1 à TTUn) est modifié directement en un signal d'état libre (»0«).

2. Procédé selon la revendication 1, caractérisé par le fait qu'on utilise comme signal de signalisation libre un signal de commande mémorisé de façon particulière dans le convertisseur de signaux respectif (TTU1 à TTUn), et qui est délivré par le convertisseur de signaux considéré d'après la délivrance de signaux d'information envoyés au préalable par ce dernier.

3. Procédé suivant la revendication 1 ou 2, caractérisé par le fait que le convertisseur de signaux considéré (TTU1 à TTUn) délivre un signal de ·commande, indiquant l'état occupé dudit convertisseur, à l'installation de commutation de données (EDS) dans le cas où le convertisseur de signaux considéré (TTU1 à TTUn) est le siège d'une perturbation.

# FIG 1

FIG 2

EDS